# EUROPEAN PATENT SPECIFICATION

(11) **EP 2 593 332 B1**
(45) Date of publication and mention of the grant of the patent: **22.04.2015**
(21) Application number: 11733923.4
(22) Date of filing: 07.07.2011
(51) Int. Cl.: B60P 1/00, B60P 1/02, B60P 1/64, B62D 33/063, B63B 25/00, B63B 25/22, B63B 27/16

(54) **A SYSTEM FOR HANDLING CARGO**
SYSTEM FÜR GÜTERUMSCHLAG
SYSTÈME DE MANIPULATION DE FRET

(30) Priority: 12.07.2010 NO 20100998
(43) Date of publication of application: 22.05.2013
(73) Proprietor: Polotec AS, 5019 Bergen (NO)
(72) Inventor: PEDERSEN, Einar, N-BERGEN N-5019 (NO)
(74) Representative: Rekdal, Kristine
(86) International application number: PCT/NO2011/000195
(87) International publication number: WO 2012/008846

(56) References cited:
- EP-A1- 0 381 455
- EP-A1- 1 209 027
- WO-A1-96/19378
- WO-A1-98/47736
- WO-A1-2006/074208
- WO-A1-2006/093445
- DE-B- 1 178 733
- DE-U1- 29 724 761
- FR-A1- 2 698 343
- GB-A- 138 264
- GB-A- 1 431 710
- GB-A- 1 587 686
- GB-A- 2 174 686
- US-B1- 7 101 139

## Description

### Field of the Invention

The present invention relates to the field of shipping of cargo and, in particular, to a system for handling cargo on board and to/from a vessel.

### Background

The invention of containers by Malcolm McLean in 1956 led to the ISO 40 Ft and 20 Ft containers to make loading of ships more efficient and to reduce pilferage. Containers have since become the backbone of international non bulk ocean borne cargo flows and have made the ocean portion of the global logistics chain very cost efficient. Special purpose container vessels have been developed carrying up to 18,000 TEU (Twenty ft Equivalent Units). In the container vessels, the containers are stacked on top of each other making multiport operation difficult due to limited access to the containers.

On the land side, container terminals have had to be built with significant investments where large cranes are used to unload the container vessels, whereafter the containers are stored for retrieval and transfer to inland means of transportation or to transfer them to feeder vessels for transport to secondary regional ports. The concentration of traffic to populated areas with a hinterland of industrial/economical activity has resulted in concentration of container traffic to very large container ports and to congestion in unloading large container vessels and congestion when transporting containers inland.

Due to the design of the containers they cannot be transported by mechanized conveyors, thereby limiting the options in respect of mechanization onboard the vessel and in the terminals.

The use of containers as a cargo carrier creates a ripple down effect of activities and cost, investments in the containers, the transport of full and empty containers, the cost of repositioning the containers due to unbalanced trade, and the distribution of the cargo that is in the container to the consignees. The cost of using the container as the cargo carrier can represent a significant part of the total cost.

The fact that the container vessels with exception of feeder vessels equipped with cranes, require shore based cranes for unloading, limiting the ports that they can use to dedicated ports and are unable to serve less populated areas and, in particular, the developing world which lacks container ports.

When looking at the total logistic line from shipper to consignee, using available modes of transportation, there are significant time and cost elements caused by the use of containers which are not in harmony with JIT (Just In Time) modem logistic and industrial development.

The other type of vessel that carries non bulk ocean cargo is Ro-Ro vessels where the cargo is on wheels, such as cars, trucks or buses, and can be driven to the respective decks or is placed on trailers moved by a tractor to the designated deck position. The Ro-Ro vessels require a dedicated ramp in port which connects to the stern of the vessel to provide access for the Ro-Ro cargo. Alternatively the vessel can carry its own ramp, typical for car carriers. This type of vessel serves a market niche for cargo on wheels and special project cargo of outsize dimensions and weight.

### Summary of the Invention

The object of the invention is to create a means of shipping cargo without necessitating the use of containers, to remove the bottleneck between vessel and pier and to eliminate the need for shore side cranes for loading and unloading the vessel and to expand the capabilities to carry, load and unload efficiently a great variety of different cargos.

This is achieved in a system for handling of a great variety of cargo as defined in the appended claim 1,and method claim 15.

The system includes a vessel according to claim 2 with multiple decks to accommodate a handling technology where the cargo is stored on special load platforms (also called skids), as defined in claim 13, and is handled with a trolley defined in claim 10, and a storage magazine as defined in claim 14. Documents that constitute the closest prior art of the different aspects of the invention are WO 2006/093445, DE 1178733, WO9847736 and EP1209027.

One of benefits of the invention is that the load platform, which has the footprint of a 40 ft ISO container, can carry any type of cargo that can be fitted within the footprint of the load platform including the ISO containers, greatly expanding the market potential of the vessel.

A vessel having three high speed elevators can unload/load 180 load platforms per hour, dramatically reducing in port time and, since the design of the onboard handling system provides flexible access to all cargo, making the vessel and its technology exceptionally well-suited to multiport liner service.

Since no shore equipment is required for the loading/unloading of the vessel, it can serve any port that can accommodate the length and draft of the vessel and is therefore also suitable for ports in the developing world.

### Brief Description of the Drawings

The invention will now be described in detail with reference to the appended drawings, in which:
Fig. 1 is a perspective view of a vessel according to the present invention,
Fig. 2 is a plane view of one of the decks in the vessel,
Fig. 3A - E shows the handling of cargo on the deck shown in Fig. 2,
Fig. 4A, B shows the opening of the side doors,
Fig. 5 shows the mechanism behind a side door,
Fig. 6A - F is a sequence showing the unloading of a load platform with cargo through one of the side doors,
Fig. 7A - C is a perspective view of a load platform,
Fig. 8A - F is a perspective view of a load platform and a trolley adapted to handle said load platform
Fig. 9A - B shows the trolley in side view,
Fig. 10A - C shows details of the trolley,
Fig. 11A is a perspective view of a magazine for storing load platforms, and
Fig. 11B shows a detail of the magazine.

### Detailed Description

The invention relates to a system for handling cargo on a cargo vessel and between vessel and quay. The system includes three elements: the cargo vessel, a load platform for storing goods, and a special trolley for transporting the load platforms.

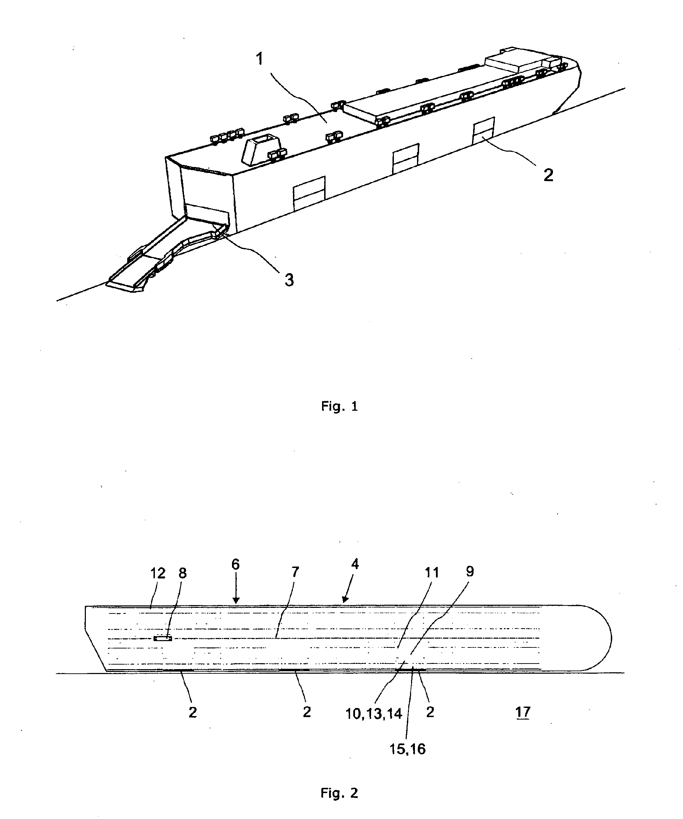

Fig. 1 shows a cargo vessel 1 according to the present invention. The vessel includes a number of decks, of which one, the main deck, is accessible through a number of side doors 2. All decks communicate by means of cargo elevators. In addition, there is an aft ramp 3 that folds down onto the pier giving access for cargo that cannot be mounted on standard size load platforms and for Ro Ro cargo. The aft ramp gives access to a particular reinforced deck that can support heavy goods.

Fig. 2 shows the main deck 4 in plane view. Cargo is located on load platforms 12 (to be described later) that are placed in short slots 6 transverse to the longitudinal axis of the ship, and with a central passageway 7. The load platforms are handled with a cargo transfer trolley 8 (also to be described later).

On the side of the vessel there are three side doors 2. At each side door there is a buffer station 9 preceding the cargo elevator 10. The buffer station includes a first conveyor means, such as a roller track 11. The trolley 8 can place a load platform 12 on said first conveyor means 11 in the buffer station 9 for transfer to the elevator 10. The cargo elevator 10 includes an elevator platform 13 with a second conveyor means 14 for receiving the load platforms. Next to the elevator, just inside the door, is located a third conveyor means 15 and a crane device 16.

When unloading the vessel, the trolley 8 is adapted to deliver load platforms 12 to the first conveyor means 11 and unload the load platform. The load platform may then pass the buffer station 9 and proceed onto the elevator platform 13. The elevator 10 will adjust its height until the second conveyor means 14 are level with the third conveyor means 15, and the load platform may then roll further onto the third conveyor means 15. At this point, the load platform is lifted by the crane device 16 and delivered onto the quay 17. From there, the load platform may be collected by any suitable portside truck/trolley/translifter and transported onward. Cargo may also be transported the other way around, i.e. collected from the quay and taken into the ship.

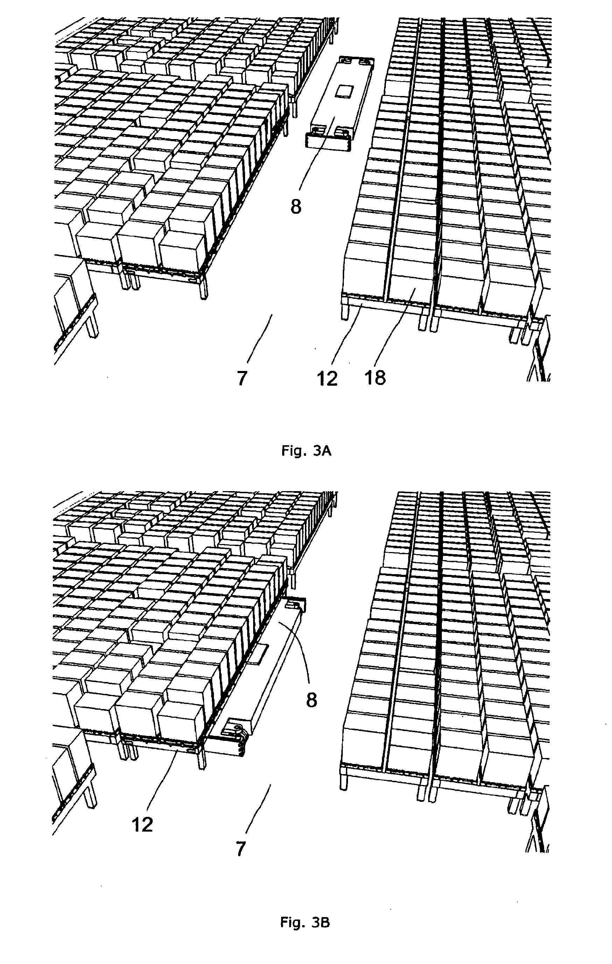

Fig. 3A shows a trolley 8 coming along the passageway 7 in order to collect a load platform 12 with goods 18.

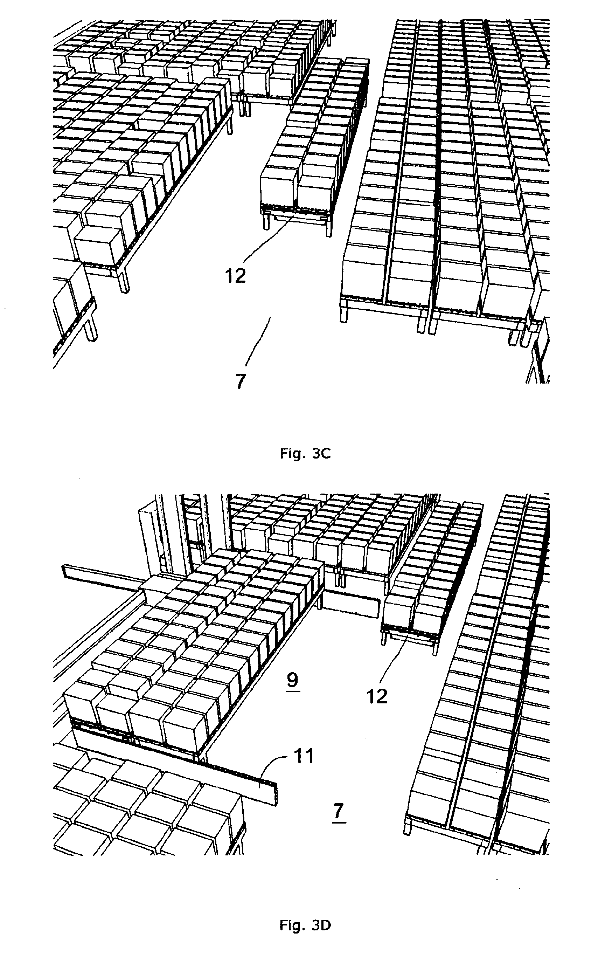

In Fig. 3B the trolley is moving in the transverse direction passing below the load platform 12. The trolley will then lift the load platform off the deck and start moving the load platform down the passageway towards side door, Fig. 3C.

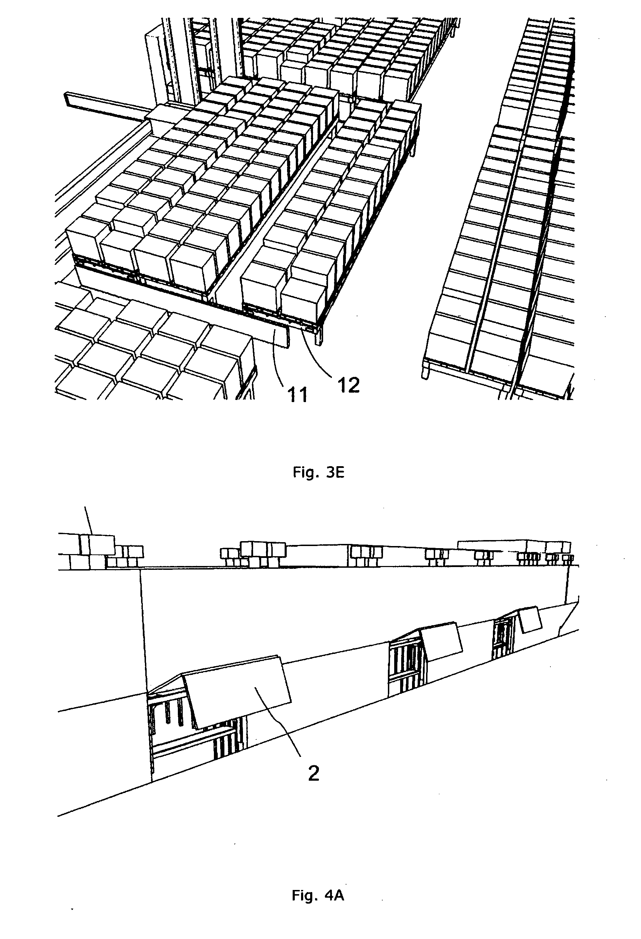

In Fig. 3D the trolley is approaching a side door, and in Fig. 3E it has started unloading the load platform on the first conveyor means 11.

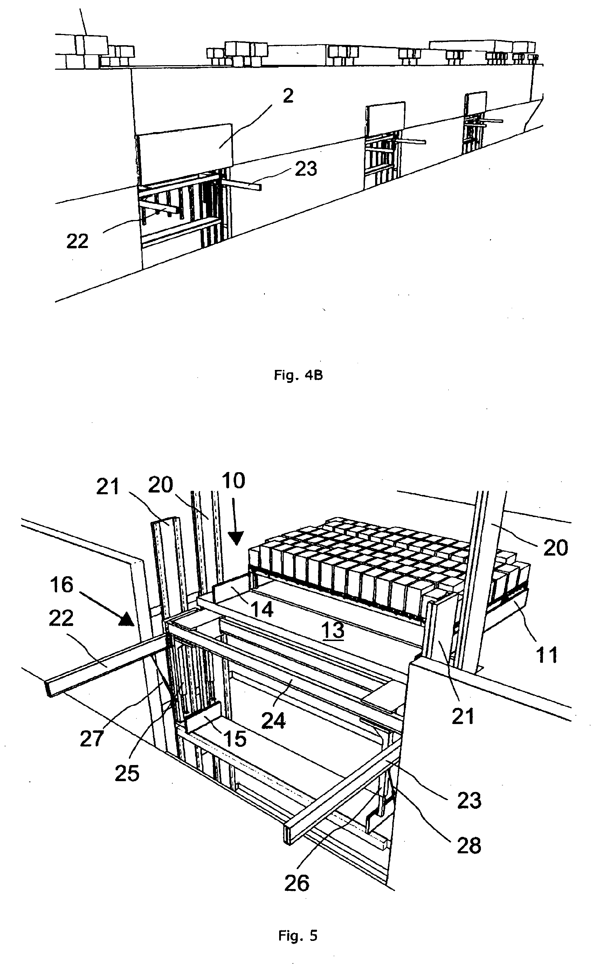

Fig. 4A shows the opening of the side doors 2. Thereafter a number of crane beams 19, two in each door opening 2, are folded out.

Fig. 5 is a detailed sketch of the arrangement behind each side door. On the deck there is a first conveyor means 11 on which the trolley is storing load platforms. In front of the first conveyor means 11 there is an elevator shaft with vertical elevator guide rails 20 along the sides. The elevator shaft runs through all decks. In the elevator shaft there is suspended an elevator platform 13 running along the elevator guide rails. The elevator platform 13 is equipped with a second conveyor means 14 which can communicate with the aforementioned first conveyor means 11 for transferring load platforms. At the level of the side door opening there is a crane arrangement 16 adapted to transfer the load platforms between the elevator platform and the quay. The crane arrangement includes a third conveyor means 15 for receiving load platforms, crane guide rails 21, hinged side beams 22, 23, a portal crane 24 spanning the side beams 22, 23 and telescopic arms with lifting hooks 25, 26. The side beams 22, 23 are folded up and down by means of hydraulic cylinders 27, 28.

The crane arrangement and the third conveyor include means for compensating for movements between the vessel and the quay. Such movements may be due to tidal variations, re-ballasting of the vessel, currents in the harbour, etc. To compensate for such changes, in both the vertical and the longitudinal planes, an optical target may be located on the quay. Sensors on board the vessel, such as cameras can then observe the position of the target and compensate for any movements of the vessel with the telescopic arms and the portal crane.

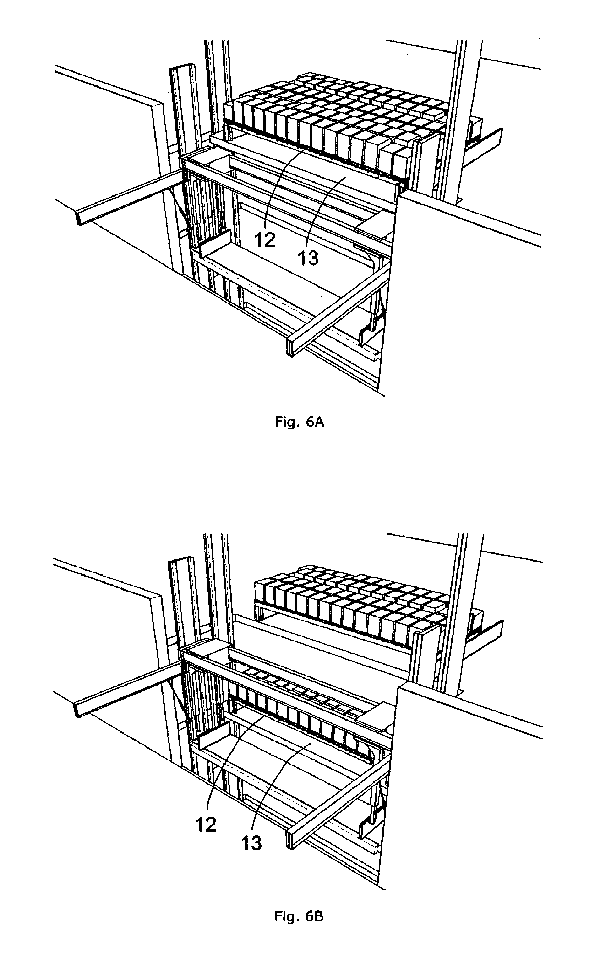

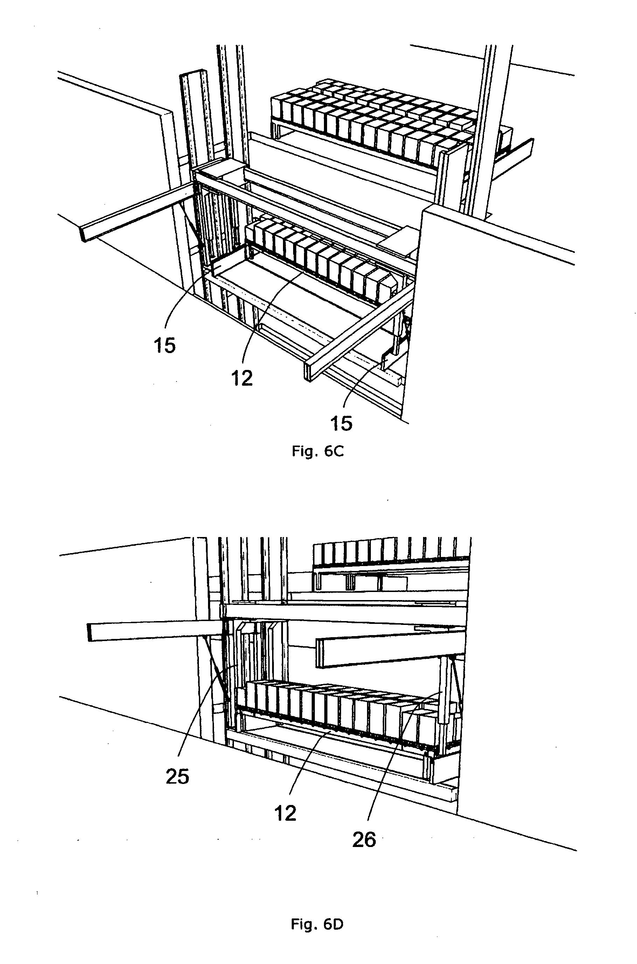

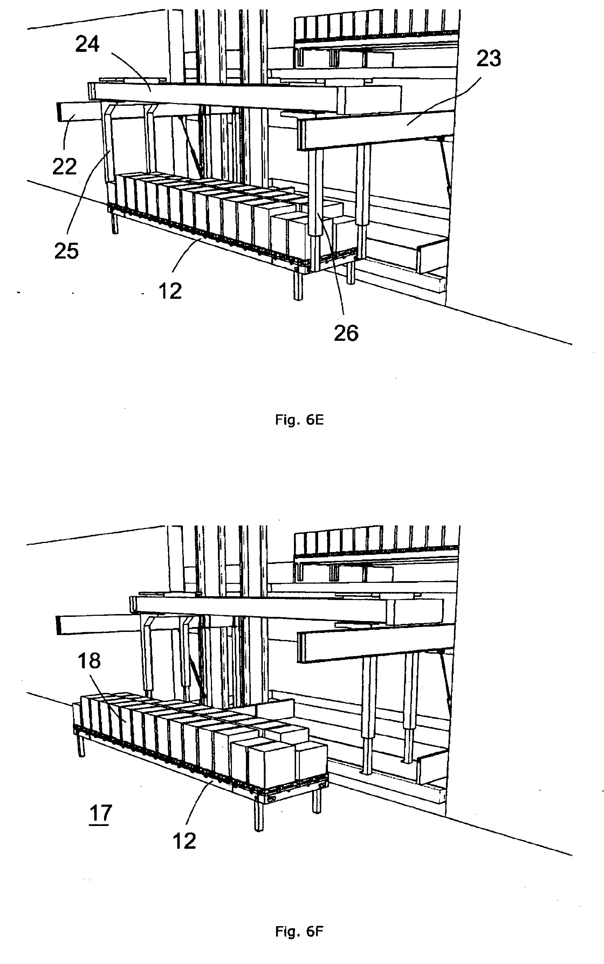

Fig. 6 shows in sequence how a load platform 12 is rolled onto the elevator platform 13, Fig. 6A. In Fig. 6B the load platform is lifted down to the level of the side door. In Fig. 6C it is rolled onto the third conveyor means 15. In Fig. 6D the lifting hooks 25, 26 have engaged the load platform 12, and in Fig. 6E it is being transferred along the side beams out of the side door. Lastly, in Fig. 6F the load platform is lowered onto the quay.

To allow the vessel to sail in high seas, the load platform will be locked to the deck with sea fastenings. The sea fastenings could be of any type suited for the purpose, but will normally be activated automatically or remotely, i.e. without human personnel present on the deck. The fastenings will not involve a major structural change to the vessel, i.e. they can be removed easily if the vessel is to be converted for another use. There are known several prior art fastening systems that may be modified for use in cargo vessels according to the present invention. Examples of such systems may be found in US patents 6,435,796 and 6,709,208.

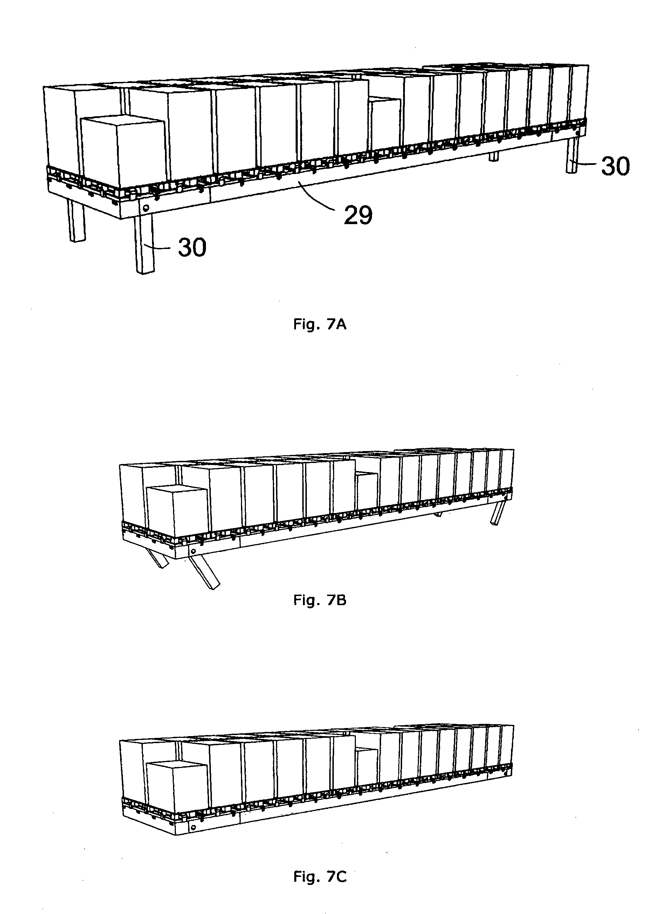

Fig. 7 shows a load platform 12 according to the invention. The load platform includes a structure or platform 29 with a foldable leg 30 in each corner. The legs are operated by a mechanical arrangement inside the structure (not shown). The load platform is fully passive, i.e. does not contain any drive mechanism, but is dependent on being connected to an external drive through a connector on the underside of the platform for folding/unfolding the legs. The folding of the legs makes the load platform conveyable on mechanized conveyors.

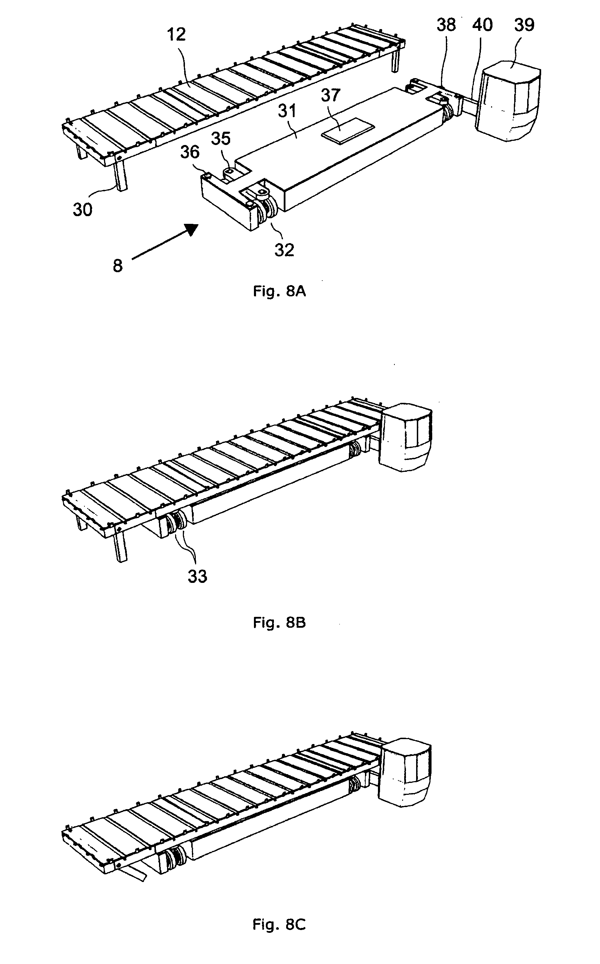

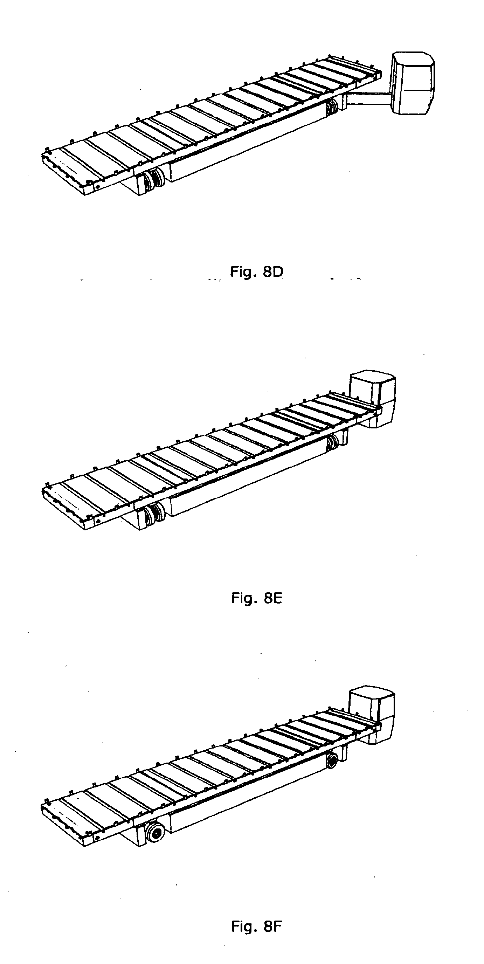

Fig. 8 shows the design of the trolley 8. The trolley includes a chassis 31 with a wheel arrangement 32 in each corner. Each wheel arrangement consists of two wheels 33 with a motor 34 inside each wheel rim. The wheel pair is mounted on a vertical shaft 35. In the upper end of the vertical shaft there is a drive mechanism inside the chassis allowing the wheel arrangement to be turned 360° around. This particular wheel arrangement allows the trolley to go in any desired direction. The use of a wheel pair arranged centrally about the vertical turning shaft means that the wheels may be turned without moving the trolley. In this embodiment of the trolley there is a jacking mechanism 36 in each corner for lifting the load platform.

Further, the trolley includes a drive mechanism with a connector 37 on the upper side of the chassis for mating with a corresponding connector on the underside of the load platform, for folding or un-folding the legs. The connector is connected to a drive unit for providing a rotational force to the legs of the external load platform through the connector. The connectors s on the load platform and trolley may be realized in several ways, e.g. as a pinion on the trolley connecting with a rack on the load platform, which when activated provides a rotational force to turn the legs of the load platform into the up or down position via a gear driving through a common axle for each pair of legs.

The trolley may be powered by a conventional diesel-electric engine arrangement. However, as it may be used within a confined compartment, it is preferred to use a less pollutant drive solution. This may be a large battery inside the chassis, or a large bank of capacitors. Any drive solution known in the art may be used for the purpose.

The trolley is adapted for fully automatic, semi-automatic or manual control. For automatic control, the trolley includes a controller unit as well as a communication unit adapted to receive instructions from a remote control centre onboard the vessel through wireless means. That is, the controller in the trolley receives orders to perform specific tasks from the control centre, and performs the tasks on its own. To allow the control centre to determine the position of the trolley and/or the trolley to know its position, the trolley includes a number of sensors adapted to read markings on the deck. The markings may be mechanical, optical or magnetic, e.g. as labels put on the deck. The trolley may then navigate its way through the vessel using these markings. Such markings may also be active, e.g. light sources.

In another embodiment, the trolley may also be remote controlled from the control centre, by the control centre determining the position of the trolley in real time from sensors located on the deck (or by receiving position readings from the trolley). Sensors located on the deck may read markings put on the trolley. Thus, the control centre may issue wireless steering signals to the trolley. The trolley may also be remote controlled by an operator observing the trolley with a camera. A system with markings and sensors may then assist the operator for accurate navigation of the trolley.

Lastly, the trolley includes at least one connector 38 allowing a detachable cabin 39 to be connected to the trolley for fully manual control. The cabin is releasably connected to the chassis through a revolving and telescopic shaft or arm 40. This may be beneficial as a back-up solution in case there is a break-down in any part of the automated control systems. With a cabin, the trolley may also be used off the vessel, e.g. on a quay without any control system. Manual control may also be used on vessels that are not equipped with an elaborate control centre. This embodiment is illustrated as in Fig. 8 as a sequence of steps showing how the cabin 39 is connected to the trolley (A), the trolley then being moved below the load platform (B), the trolley lifting the load platform, connecting to the load platform and folding the legs on the load platform (C) to let the cabin be relocated (D), turning the wheels into the appropriate direction (E) and transporting the load platform away in the longitudinal direction (F).

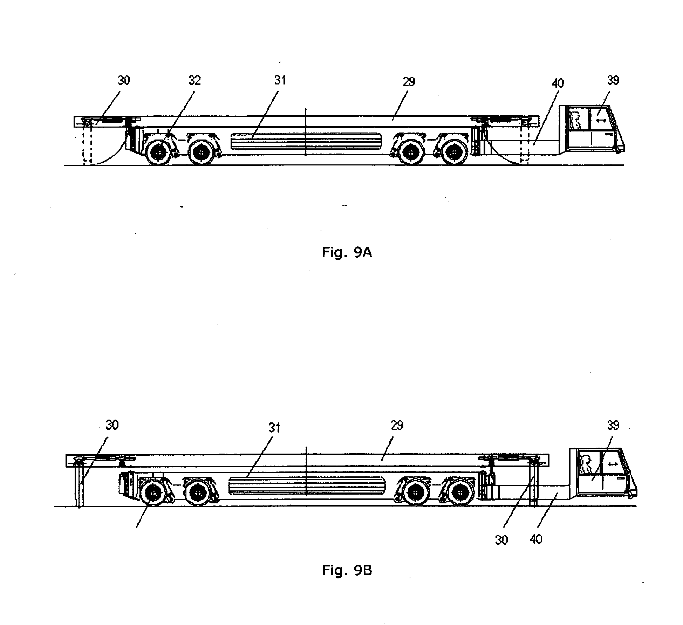

Fig. 9A - B shows a load platform and trolley in side view. The trolley is a heavy duty version, with a double set of wheel arrangements. Fig. 9A shows the load platform mounted on the trolley with the legs turned up. In Fig. 9B, the load platform has been lifted up, the legs turned down and the load platform subsequently lowered onto the ground. The trolley may then drive forward leaving the load platform behind.

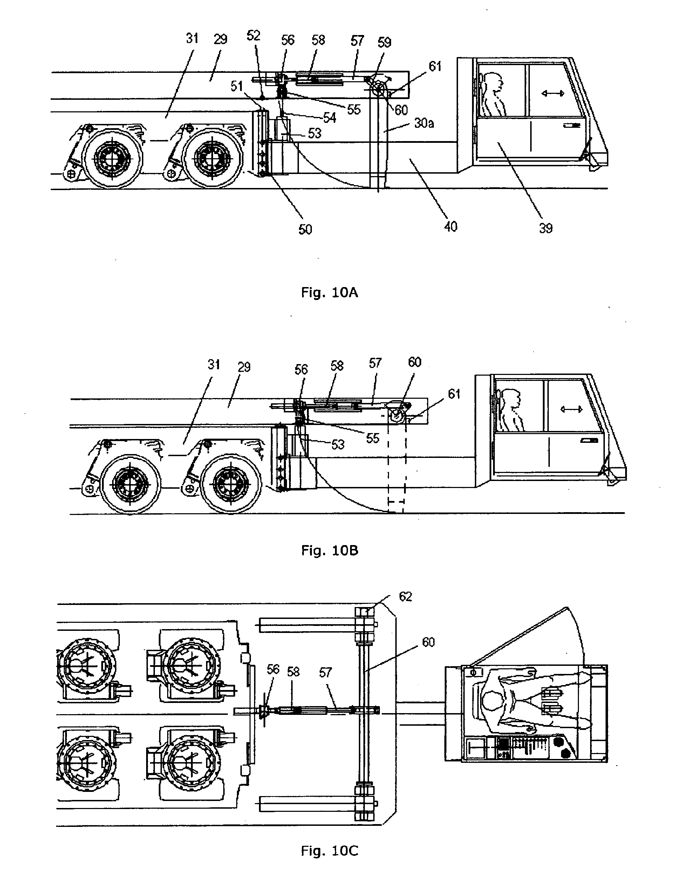

Fig. 10 shows the mechanism for raising and lowering the legs in detail. In Fig. 10A, the load platform is standing on the floor on its legs. The trolley is located below the load platform ready to collect it for transport to another location. The trolley is a heavy duty version with double sets of wheel arrangements 32.

In Fig. 10B the trolley has lifted the load platform from the floor and turned the legs up. A cabin 39 is mounted on the trolley chassis through an arm 40. The arm is connected to the chassis in a hinge 50 allowing the cabin to turn to the sides. The trolley may also include a mechanism allowing the hinge to be shifted towards the sides. This version of the trolley is adapted to lift the load platform by raising the wheel arrangements, e.g. by cylinders lifting the chassis from the wheel arrangements. A hemispherical bracket 51 on the trolley is adapted to engage a mating bracket 52 on the load platform, the brackets preventing any relative movement between the load platform and trolley.

The trolley also includes a drive unit 53 with a liftable spline shaft 54. The spline shaft is adapted to be lifted into and engage a corresponding friction coupling 55 on the load platform. The friction coupling 55 is connected to a worm gear screw jack 56 with self locking gear ratio, which on the other hand is connected to a push/pull link bar 57 suspended in a guided sliding bracket 58. The link bar 57 transfers linear movements from the screw jack to a pin 59 on a rotating shaft 60 connecting the legs 30a, b. The shaft 60 is suspended in the chassis in bearings 62 at each end thereof. A tilt stop bracket 61 is included to prevent the legs from spreading too far. Corresponding mechanisms are located at the aft ends of the trolley and load platform, as illustrated in Fig. 10.

When operating the trolley to raise or lower the legs 30a, b, the spline shaft 54 is lifted to engage the friction coupling 55on the load platform. The drive unit 54 is operated to rotate the shaft. This rotating movement is translated into a linear movement in the screw jack 56, and further transferred to the pin 59 via the link bar 57. The pin 59 will then rotate the shaft 60 causing the legs to be raised from or lowered to the ground, respectively.

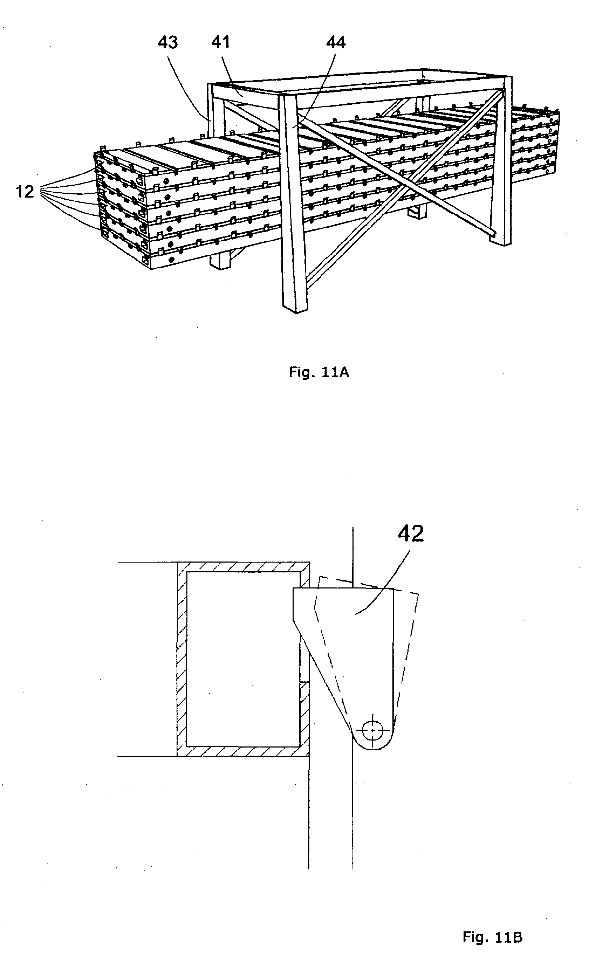

In Fig. 11A a magazine for storing load platforms is shown. Such magazines could be located on board the ship and in ports. The magazine includes a rectangular frame structure 41 with four legs forming a first 43 and second 44 pair of legs. Load platforms may be stored in the magazine (with the legs folded) forming a stack arrested by a number of spring loaded keys 42 (Fig. 11B). A trolley transporting a load platform may enter the magazine and raise its jacks. The load platform will lift the stack until it engages the keys 42 and is locked. Then, the trolley will lower the jacks and go to fetch another load platform. Instead of pairs with legs, elongate pillars may be used, each with two keys for holding the stack of load platforms.

A stack of load platforms may be removed by a trolley by lifting another load platform from below until it engages and lifts the stack. The keys are forced outward and the upward movement must be terminated before the keys enter below the lowermost load platform. In this position the trolley may go forward and remove the stack.

The invention is illustrated using roller tracks as conveyors for storing and transporting load platforms over small distances. However, any other conveyor suited for the purpose may be used, such as band conveyors.

## Claims

1. A system for handling cargo on board and to/from a vessel,
said system including a cargo vessel (1) with a plurality of cargo decks (4), a number of side doors (2), a cargo elevator (10) located inside each side door (2) communicating with said cargo decks (4), and a crane (16) located inside each side door (2),
**characterized i n** that the system further includes a number of standardized cargo load platforms (12) with foldable legs (30), the cargo load platforms (12) being adapted to store cargo, the cargo load platforms (12) being stored on the cargo decks (4) in slots (6) along the sides of the vessel (1) and transverse to the longitudinal axis of the vessel and with a passageway (7) between the slots (6) along the longitudinal axis of the vessel,
the system further includes a number of trolleys (8) adapted to transport the load platforms (12) between the slots (6) and the cargo elevators (10), the trolleys being adapted to fold or unfold the legs (30) on the load platforms (12).

2. A cargo vessel (1) with a plurality of cargo decks (4) and a number of side doors (2), a cargo elevator (10) located inside each side door (2) communicating with said cargo decks (4), and a crane (16) located inside each side door (2), said crane (16) being adapted to move cargo between the vessel (1) and a quay (17),
**characterized i n** that the cargo is stored on standardized cargo load platforms (12) with foldable legs (30), wherein each cargo load platform (12) is adapted to be transported with a trolley (8), where the trolley (8) is adapted to fold or unfold the legs (30) on the cargo load platform (12), each cargo deck (4) being adapted to store the cargo load platforms (12) in slots (6) along the sides of the vessel and transverse to the longitudinal axis of the vessel and with a passageway (7) between the slots along the longitudinal axis of the vessel.

3. The cargo vessel in claim 2, further including mechanical, optical or magnetic markings on each deck for the navigation and positioning of the trolley (8), and/or on the trolley itself, and sensors for reading said markings.

4. The cargo vessel in claim 2, further including a controller controlling the position of the trolley, said controller communicating with the trolley through wireless means.

5. The cargo vessel in claim 2, further including a buffer station (9) at each side door (2) for storing load platforms (12), said buffer station (9) including first conveyor means (11).

6. The cargo vessel in claim 2, wherein the cargo elevator (10) includes an elevator platform (13) with a second conveyor means (14).

7. The cargo vessel in claim 2, wherein the crane (16) includes a third conveyor means (15) for receiving load platforms (12), crane guide rails (21), side beams (22, 23) hinged to the crane guide rails (21), hydraulic cylinders (27, 28) for folding and unfolding the side beams (22, 23), a portal crane (24) spanning the side beams (22, 23) and telescopic lifting hooks (25, 26).

8. The cargo vessel in claim 5, 6 and 7, wherein said first, second and third conveyor means (11, 14, 15) are roller tracks.

9. The cargo vessel in claim 7, wherein the crane (16) includes means for compensating for movements of the vessel with the telescopic arms (25, 26) and the portal crane (24).

10. A cargo trolley (8) adapted for use with a cargo load platform (12) with foldable legs (30), the cargo trolley (8) including a chassis (31) with a number of turnable wheel arrangements (32), at least some of the wheel arrangements being driven by electric motors (34), said trolley further including lifting means (36),
**characterized i n** that the trolley (8) includes a mechanical connector (37) with drive means adapted to fold or unfold the legs (30) on the cargo load platforms (12), and a detachable operator cabin (39) that may be connected to the trolley (8) for manual control of the trolley, the cabin being connected to the trolley with a telescopic and turnable arm (40), whereby the trolley may be controlled manually, semi-automatically or fully automatically.

11. The cargo trolley of claim 10, wherein the trolley (8) is adapted to be positioned below a cargo load platform (12) with foldable legs (30), lift the cargo load platform from the support into a transport position with the lifting means (36), connect the drive means to a mating connector in the cargo load platform (12) and fold or unfold the legs (30) using the drive means.

12. The cargo trolley of claim 10, wherein the trolley includes means for remote control.

13. A cargo load platform (12) with a platform structure (29) and a number of legs (30), the cargo load platform (12) is adapted to be transported with a cargo trolley (8),
**characterized i n** a mechanism for folding the legs (30) into and out of the structure (29), said mechanism being activated through a mechanical connector on the underside of the cargo load platform (12) for connecting to an external drive means, where the external drive means is activated by the cargo trolley (8).

14. A magazine for storing a number of cargo load platforms with a platform structure (29) and a number of legs (30), wherein a cargo load platform (12) is adapted to be transported with a cargo trolley (8), and where the cargo load platform (12) is provided with a mechanism for folding the legs (30) into and out of the structure (29), said mechanism being activated through a mechanical connector for connecting to an external drive means, where the external drive means is activated by the cargo trolley (8),
**characterized i n** that said magazine includes a rectangular frame structure (41) with a first (43) and second (44) pair of legs or two pillars, the distance between the two pairs or pillars being wide enough to accommodate a load platform (12) in the longitudinal direction, each leg or pillar including at least one spring loaded key (42) for engaging and holding a load platform (12), the magazine is adapted for use with a cargo trolley (8), where the cargo trolley may enter the magazine and effecting lifting of the number of cargo platforms in the magazine for locking or removing at least a cargo load platform (12) from the number of cargo load platforms in the magazine.

15. A method for transporting palletized cargo stored on a load platform with foldable legs, including the steps of
positioning a trolley below the load platform
lifting the load platform with the trolley,
connecting a drive unit in the trolley to the load platform,
folding in the legs of the load platform using said drive unit,
transporting the load platform with the trolley to another location, and either lowering the load platform onto a conveyor, or
folding out the legs using the drive unit in the trolley, and then lowering the load platform to the ground standing on the legs.

## Patentansprüche

1. System für den Güterumschlag an Bord sowie auf/von einem Schiff,
wobei das genannte System ein Frachtschiff (1) mit einer Vielzahl von Frachtdecks (4), einer Reihe von Seitentüren (2), einem Frachtaufzug (10) im Inneren jeder Seitentür (2), der zu den genannten Frachtdecks (4) führt, und einem Kran (16) im Inneren jeder Seitentür (2) umfasst,
**dadurch gekennzeichnet, dass** das System weiterhin eine Reihe standardisierter Frachtladeplattformen (12) mit einklappbaren Beinen (30) umfasst, wobei die Frachtladeplattformen (12) dafür eingerichtet sind, Fracht aufzunehmen, wobei die Frachtladeplattformen (12) auf den Frachtdecks (4) in Einschubplätzen (6) entlang den Seiten des Schiffs (1) und quer zur Längsachse des Schiffs und mit einem Durchgang (7) zwischen den Einschubplätzen (6) entlang der Längsachse des Schiffs gelagert werden, das System weiterhin eine Reihe von Transportwagen (8) umfasst, die dafür eingerichtet sind, die Ladeplattformen (12) zwischen den Einschubplätzen (6) und den Frachtaufzügen (10) zu transportieren, wobei die Transportwagen dafür eingerichtet sind, die Beine (30) an den Ladeplattformen (12) ein- oder auszuklappen.

2. Frachtschiff (1) mit einer Vielzahl von Frachtdecks (4) und einer Reihe von Seitentüren (2), einem Frachtaufzug (10) im Inneren jeder Seitentür (2), der zu den genannten Frachtdecks (4) führt, und einem Kran (16) im Inneren jeder Seitentür (2), wobei der genannte Kran (16) dafür eingerichtet ist, Fracht zwischen dem Schiff (1) und einem Kai (17) zu bewegen,
**dadurch gekennzeichnet, dass** die Fracht auf standardisierten Frachtladeplattformen (12) mit einklappbaren Beinen (30) abgelegt wird, wobei jede Frachtladeplattform (12) dafür eingerichtet ist, von einem Transportwagen (8) befördert zu werden, wobei der Transportwagen (8) dafür eingerichtet ist, die Beine (30) an der Frachtladeplattform (12) ein- oder auszuklappen, wobei jedes Frachtdeck (4) dafür eingerichtet ist, die Frachtladeplattformen (12) in Einschubplätzen (6) entlang den Seiten des Schiffs (1) und quer zur Längsachse des Schiffs und mit einem Durchgang (7) zwischen den Einschubplätzen entlang der Längsachse des Schiffs aufzunehmen.

3. Frachtschiff nach Anspruch 2, weiterhin mit mechanischen, optischen oder magnetischen Markierungen auf jedem Deck für die Navigation und Positionierung des Transportwagens (8) und/oder am Transportwagen selbst sowie Sensoren zum Lesen der Markierungen.

4. Frachtschiff nach Anspruch 2, weiterhin mit einer Steuereinheit zur Steuerung der Position des Transportwagens, wobei die genannte Steuereinheit drahtlos mit dem Transportwagen kommuniziert.

5. Frachtschiff nach Anspruch 2, weiterhin mit einer Pufferstation (9) an jeder Seitentür (2) zur Aufnahme der Ladeplattformen (12), wobei die genannte Pufferstation (9) eine erste Fördervorrichtung (11) umfasst.

6. Frachtschiff nach Anspruch 2, wobei der Frachtaufzug (10) eine Aufzugsplattform (13) mit einer zweiten Fördemorrichtung (14) umfasst.

7. Frachtschiff nach Anspruch 2, wobei der Kran (16) eine dritte Fördervorrichtung (15) zur Aufnahme von Ladeplattformen (12), Kranführungsschienen (21), an den Kranführungsschienen (21) gelenkig angebrachte Seitenträger (22, 23), Hydraulikzylinder (27, 28) zum Ein- und Ausklappen der Seitenträger (22, 23), einen die Seitenträger (22, 23) überspannenden Portalkran (24) und Teleskophebehaken (25,26) umfasst.

8. Frachtschiff nach Anspruch 5, 6 und 7, wobei die genannten ersten, zweiten und dritten Fördervorrichtungen (11, 14, 15) Rollenschienen sind.

9. Frachtschiff nach Anspruch 7, wobei der Kran (16) Mittel umfasst, um mit den Teleskoparmen (25, 26) und dem Portalkran (24) Bewegungen des Schiffs auszugleichen.

10. Transportwagen (8), eingerichtet für die Verwendung mit einer Frachtladeplattform (12) mit einklappbaren Beinen (30), wobei der Transportwagen (8) ein Chassis (31) mit einer Reihe drehbarer Radanordnungen (32) umfasst, von denen zumindest einige durch Elektromotoren (34) angetrieben werden, und wobei der genannte Transportwagen weiterhin Hebevorrichtungen (36) umfasst,
**dadurch gekennzeichnet, dass** der Transportwagen (8) ein mechanisches Verbindungselement (37) mit einer Antriebsvorrichtung umfasst, um die Beine (30) an den Frachtladeplattformen (12) ein- oder auszuklappen, und eine abnehmbare Fahrerkabine (39), die zur manuellen Steuerung des Transportwagens am Transportwagen (8) angebracht werden kann, wobei die Kabine mit einem ausfahrbaren und drehbaren Arm (40) mit dem Transportwagen verbunden wird, wobei der Transportwagen manuell, halbautomatisch oder vollautomatisch gesteuert werden kann.

11. Transportwagen nach Anspruch 10, wobei der Transportwagen (8) dafür eingerichtet ist, unter einer Frachtladeplattform (12) mit einklappbaren Beinen (30) positioniert zu werden, die Frachtladeplattform mittels der Hebelvorrichtung (36) von der Unterlage in eine Transportposition anzuheben, die Antriebsvorrichtung mit einem geeigneten Verbindungselement in der Frachtladeplattform (12) zu verbinden und die Beine (30) mit der Antriebsvorrichtung ein- oder auszuklappen.

12. Transportwagen nach Anspruch 10, wobei der Transportwagen Mittel zur Fernsteuerung umfasst.

13. Frachtladeplattform (12) mit einer Plattformstruktur (29) und einer Reihe von Beinen (30), wobei die Frachtladeplattform (12) dafür eingerichtet ist, mit einem Transportwagen (8) transportiert zu werden,
**gekennzeichnet durch** einen Mechanismus, der die Beine (30) in die Struktur (29) hineinund herausklappt, wobei der genannte Mechanismus über ein mechanisches Verbindungselement auf der Unterseite des Frachtladeplattform (12) für die Verbindung mit einer externen Antriebsvorrichtung aktiviert wird und die externe Antriebsvorrichtung durch den Transportwagen (8) aktiviert wird.

14. Magazin zum Aufnehmen einer Reihe von Frachtladeplattformen mit einer Plattformstruktur (29) und einer Reihe von Beinen (30), wobei eine Frachtladeplattform (12) dafür eingerichtet ist, mit einem Transportwagen (8) transportiert zu werden, und wobei die Frachtladeplattform (12) mit einem Mechanismus versehen ist, der die Beine (30) in die Struktur (29) hinein- und herausklappt, wobei der genannte Mechanismus über ein mechanisches Verbindungselement für die Verbindung mit einer externen Antriebsvorrichtung aktiviert wird und die externe Antriebsvorrichtung durch den Transportwagen (8) aktiviert wird,
**dadurch gekennzeichnet, dass** das genannte Magazin eine rechteckige Rahmenstruktur (41) mit einem ersten (43) und einem zweiten (44) Beinpaar oder zwei Säulen umfasst, wobei der Abstand zwischen den beiden Paaren oder Säulen breit genug ist, um eine Ladeplattform (12) in Längsrichtung aufzunehmen, wobei jedes Bein oder jede Säule mindestens einen federbelasteten Keil (42) zum Einrasten und Festhalten einer Ladeplattform (12) umfasst, wobei das Magazin zur Verwendung mit einem Transportwagen (8) vorgesehen ist, wobei der Transportwagen in das Magazin hineinfahren und die Reihe von Frachtplattformen im Magazin anheben kann, um mindestens eine Frachtladeplattform (12) von der Reihe von Frachtladeplattformen im Magazin zu verriegeln oder zu entfernen.

15. Verfahren zum Transportieren palettierter Fracht auf einer Ladeplattform mit klappbaren Beinen, wobei das Verfahren die folgenden Schritte umfasst:
- Positionieren eines Transportwagens unter der Ladeplattform,
- Anheben der Ladeplattform mit dem Transportwagen,
- Verbinden einer Antriebseinheit im Transportwagen mit der Ladeplattform,
- Einklappen der Beine der Ladeplattform mithilfe der genannten Antriebseinheit,
- Transportieren der Ladeplattform mit dem Transportwagen an einen anderen Ort, und entweder
- Absenken der Ladeplattform auf eine Fördervorrichtung oder
- Ausklappen der Beine mithilfe der Antriebseinheit in dem Transportwagen und dann Absenken der Ladeplattform auf den Boden, auf den Beinen stehend.

## Revendications

1. Système de manipulation de fret à bord d'un navire et vers/depuis ce dernier,
ledit système comprenant un navire de charge (1) présentant une pluralité de ponts à fret (4), un certain nombre de portes latérales (2), un monte-charge (10) situé à l'intérieur de chaque porte latérale (2) communiquant avec lesdits ponts à fret (4), et une grue (16) située à l'intérieur de chaque porte latérale(2),
**caractérisé en ce que** le système comprend en outre un certain nombre de plates-formes de chargement de fret (12) standardisées munies de pieds pliables (30), les plates-formes de chargement de fret (12) étant conçues pour stocker le fret, les plates-formes de chargement de fret (12) étant stockées sur les ponts à fret (4) dans des fentes (6) le long des côtés du navire (1) et de manière transversale par rapport à l'axe longitudinal du navire, un passage (7) étant agencé entre les fentes (6) le long de l'axe longitudinal du navire,
le système comprend en outre un certain nombre de chariots (8) conçus pour transporter les plate-formes de chargement (12) entre les fentes (6) et les monte-charges (10), les chariots étant conçus pour replier ou déplier les pieds (30) sur les plate-formes de chargement (12).

2. Navire de charge (1) présentant une pluralité de ponts à fret (4) et un certain nombre de portes latérales (2), un monte-charge (10) étant situé à l'intérieur de chaque porte latérale (2) communiquant avec lesdits ponts à fret (4), et une grue (16) située à l'intérieur de chaque porte latérale (2), ladite grue (16) étant conçue pour déplacer le fret entre le navire (1) et un quai (17), **caractérisé en ce que** le fret est stocké sur des plate-formes de chargement de fret (12) standardisées munies de pieds pliables (30), dans lequel chaque plate-forme de chargement de fret (12) est conçue pour être transportée avec un chariot (8), le chariot (8) étant conçu pour replier ou déplier les pieds (30) sur la plate-forme de chargement de fret (12), chaque pont à fret (4) étant conçu pour stocker les plate-formes de chargement de fret (12) dans des fentes (6) le long des côtés du navire et de manière transversale par rapport à l'axe longitudinal du navire et avec un passage (7) entre les fentes le long de l'axe longitudinal du navire.

3. Navire de charge selon la revendication 2, comprenant en outre des repères mécaniques, optiques ou magnétiques sur chaque pont pour la navigation et le positionnement du chariot (8) et/ou sur le chariot lui-même, et des capteurs pour lire lesdits repères.

4. Navire de charge selon la revendication 2, comprenant en outre un contrôleur contrôlant la position du chariot, ledit contrôleur communiquant avec le chariot par l'intermédiaire de moyens sans fil.

5. Navire de charge selon la revendication 2, comprenant en outre un poste tampon (9) à chaque porte latérale (2) pour stocker des plate-formes de chargement (12), ledit poste tampon (9) comprenant un premier moyen de transport (11).

6. Navire de charge selon la revendication 2, dans lequel le monte-charge (10) comprend une plate-forme élévatrice (13) avec un deuxième moyen de transport (14).

7. Navire de charge selon la revendication 2, dans lequel la grue (16) comprend un troisième moyen de transport (15) pour recevoir des plate-formes de chargement (12), des rails de guidage de grue (21), des poutres latérales (22, 23) articulées sur les rails de guidage de grue (21), des cylindres hydrauliques (27, 28) pour replier et déplier les poutres latérales (22, 23), une grue sur portique (24) couvrant les poutres latérales (22, 23) et des crochets de levage télescopiques (25, 26).

8. Navire de charge selon les revendications 5, 6 et 7, dans lequel lesdits premier, deuxième et troisième moyens de transport (11, 14, 15) sont des chemins de roulement.

9. Navire de charge selon la revendication 7, dans lequel la grue (16) comprend des moyens pour compenser les mouvements du navire avec les bras télescopiques (25, 26) et la grue sur portique (24).

10. Chariot de fret (8) conçu pour être utilisé avec une plate-forme de chargement de fret (12) munie de pieds pliables (30), le chariot de fret (8) comprenant un châssis (31) présentant un certain nombre d'agencements de roues pouvant tourner (32), au moins certains des agencements de roues étant entraînés par des moteurs électriques (34), ledit chariot comprenant en outre des moyens de levage (36), **caractérisé en ce que** le chariot (8) comprend un connecteur mécanique (37) présentant des moyens d'entraînement conçus pour replier ou déplier les pieds (30) sur les plate-formes de chargement de fret (12), et une cabine d'opérateur détachable (39) qui peut être connectée au chariot (8) pour contrôler manuellement le chariot, la cabine étant connectée au chariot avec un bras télescopique et pouvant tourner (40), le chariot pouvant être contrôlé de manière manuelle, semi-automatique ou totalement automatique.

11. Chariot de fret selon la revendication 10, dans lequel le chariot (8) est conçu pour être positionné en dessous d'une plate-forme de chargement de fret (12) munie de pieds pliables (30), pour soulever la plate-forme de chargement de fret depuis le support dans une position de transport avec le moyen de levage (36), pour connecter les moyens d'entraînement à un connecteur correspondant dans la plate-forme de chargement de fret (12) et pour replier ou déplier les pieds (30) en utilisant les moyens d'entraînement.

12. Chariot de fret selon la revendication 10, dans lequel le chariot comprend des moyens de contrôle à distance.

13. Plate-forme de chargement de fret (12) présentant une structure de plate-forme (29) et un certain nombre de pieds (30), la plate-forme de chargement de fret (12) est conçue pour être transportée avec un chariot de fret (8),
**caractérisée par** un mécanisme pour replier les pieds (30) dans la structure et les déplier hors de la structure (29), ledit mécanisme étant activé par un connecteur mécanique en dessous de la plate-forme de chargement de fret (12) pour se connecter à un moyen d'entraînement externe, le moyen d'entraînement externe étant activé par le chariot de fret (8).

14. Magasin pour stocker un certain nombre de plate-formes de chargement de fret présentant une structure de plate-forme (29) et un certain nombre de pieds (30), dans lequel une plate-forme de chargement de fret (12) est conçue pour être transportée avec un chariot de fret (8), et la plate-forme de chargement de fret (12) est dotée d'un mécanisme de repliage des pieds (30) dans la structure et de dépliage des pieds hors de la structure (29), ledit mécanisme étant activé par un connecteur mécanique pour se connecter à un moyen d'entraînement externe, le moyen d'entraînement externe étant activé par le chariot de fret (8),
**caractérisé en ce que** ledit magasin comprend une structure de cadre rectangulaire (41) présentant une première paire (43) et une deuxième paire (44) de pieds ou deux piliers, la distance entre les deux paires ou piliers étant suffisamment large pour recevoir une plate-forme de chargement (12) dans le sens longitudinal, chaque pied ou pilier comprenant au moins une clé sollicitée par ressort (42) pour mettre en prise et maintenir une plate-forme de chargement (12), le magasin est conçu pour être utilisé avec un chariot de fret (8), le chariot de fret pouvant entrer dans le magasin et effectuer un levage du certain nombre de plates-formes de fret dans le magasin pour verrouiller au moins une plate-forme de chargement de fret (12) ou la retirer du certain nombre de plates-formes de chargement de fret dans le magasin.

15. Procédé pour transporter un fret palettisé stocké sur une plate-forme de chargement munie de pieds pliables, comprenant les étapes suivantes :
positionner un chariot en dessous de la plate-forme de chargement
lever la plate-forme de chargement avec le chariot,
connecter une unité d'entraînement dans le chariot à la plate-forme de chargement,
replier les pieds de la plate-forme de chargement en utilisant ladite unité d'entraînement,
transporter la plate-forme de chargement avec le chariot vers un autre emplacement, et
descendre la plate-forme de chargement sur un moyen de transport, ou
déplier les pieds en utilisant l'unité d'entraînement dans le chariot, puis descendre la plate-forme de chargement sur le sol, placée sur les pieds.
